# EUROPEAN PATENT APPLICATION

(11) **EP 1 065 829 A2**
(43) Date of publication of application: **03.01.2001**
(21) Application number: 00305202.4
(22) Date of filing: 20.06.2000
(51) Int. Cl.: H04L 12/28, H04M 11/06, H04L 12/46, H04L 12/66

(54) **Interoperability of home networking devices in A 2-line residence**

(30) Priority: 30.06.1999 US 141655 P; 16.05.2000 US 571926
(71) Applicant: LUCENT TECHNOLOGIES INC., Murray Hill, New Jersey 07974-0636 (US)
(72) Inventor: Huang, Gang, Highlands, New Jersey 07732 (US); Strauss, Steven E., Orefield, Pennsylvania 18069 (US)
(74) Representative: Buckley, Christopher Simon Thirsk

(57) **Abstract**

A home network filter bridge connecting two separate networks operating over two separate telephone lines are spectrally connected in a high frequency region associated with a home network (e.g., HomePNA), while maintaining isolation of lower frequency signals between the two telephone lines relating to, e.g., voice signals and/or xDSL services. The home network filter bridge includes in one embodiment a band pass filter for passing the relevant spectral component (e.g., between approximately 4 MHz and 10 MHz) from one telephone line to another, and an appropriate bridging circuit to combine the passed high frequency spectral component from another telephone line with all components of a second telephone line. A similar band pass filter and bridge circuit passes a similar spectral component from the second telephone line to the first telephone line, through another appropriate bridge circuit. The home network filter bridge may connect to both telephone lines using, e.g., standard RJ-11 type connections. Using the home network filter bridge in accordance with the principles of the present invention, home network devices on either home network can intercommunicate in a simple, plug and play fashion. The invention is applicable to the spectral connection of 2 or more telephone lines each supporting a home network such as HomePNA.

## Description

This application claims priority from U.S. Provisional Application No. 60/141,655, filed by Express Mail on June 30, 1999, entitled "Interoperability Of Home Networking Devices In A 2 Line Residence, the entirety of which is expressly incorporated herein by reference.

### BACKGROUND OF THE INVENTION

### 1. Field of the Invention

The invention is directed to the field of networked devices, such as computers networked via a home network. In particular, it relates to a technique and apparatus for increasing the capacity and flexibility of a home or office having at least two separate telephone lines.

### 2. Background of Related Art

The emerging specification known as HomePNA (promulgated by the Home Phoneline Networking Alliance) is primarily directed toward the implementation of networking among multiple devices using a telephone line, without disturbing existing services which already use the telephone line (e.g., voice and DSL). Thus, since HomePNA is transparent to phone services as well as xDSL technologies (e.g., the proposed G.lite/UADSL), all three technologies (plain old telephone system (POTS), xDSL, and the home Phoneline network) can simultaneously operate over the same telephone line, without interfering with regular telephone service.

Fig. 6 shows a conventional distribution of spectral regions typically used for voice services, xDSL services such as ADSL and g.Lite or G.992.2, and of a home network such as the HomePNA. As shown in Fig. 6, a single telephone line is shared in a Frequency Division Multiplexed (FDM) topology. In this arrangement, Plain Old Telephone Service (POTS) exists in the 0-4 kHz region, exemplary xDSL service is present from 25 kHz to approximately 2.2 MHz (depending on the definition of "x"), and the HomePNA spectrum occupies 5.5-9.5 MHz for HPNA V1.x technology and 4.25-9.75 MHz for the emerging V2.x technology.

Example applications for HomePNA include allowing multiple computers or other devices to share Internet access using the same telephone line, sharing a printer or other peripheral, file and application sharing, and/or networked gaming.

Details regarding the HomePNA specification are available from conventional sources, including at the web site www.homepna.org.

A key objective of the HomePNA specification is to ensure that a Phoneline network will coexist with existing uses, e.g., voice conversations using conventional telephones, and Internet access solutions such as Universal ADSL/G.lite, as well as emerging home RF and powerline networking specifications.

Currently, HomePNA devices operate at 10 Mb/s and beyond. HomePNA devices are currently commercially available from TUT SYSTEMS.

The HomePNA is generally designed to allow communication between HomePNA devices up to 500 feet apart (in telephone line wiring distance). Initially, the specification will accommodate up to twenty-five (25) PCs, peripherals, and/or other network devices on a single telephone line.

As the convenience and availability of the home network approach grows, the applications will become endless. Televisions, computers, appliances, and even lights can communicate over the home network (e.g., HomePNA).

There has been an explosive growth in the use of multiple telephone lines in many households, driven largely by the need for simultaneous Internet access in addition to conventional voice services. Using current home network technology, applications will be limited to operation over a single telephone line, leaving out a solution for devices which operate on different telephone lines.

Currently, problems exist in interconnections between computers isolated on different wire pairs in a residence. There is not a present way, according to the Home Phoneline Network Alliance (HomePNA) specification, for a device on a first pair of wires to communicate with a device on a second pair of wires. This invention addresses the interconnection issues while maintaining isolation of other services concurrently sharing the media.

Essentially, a typical home served by twisted pair POTS service is wired with four wires, two of which are used for tip and ring for a telephone line, and the other two of which are used for tip and ring if the home has a second telephone line, such as is commonly utilized for Internet access. If a user has two active lines, meaning all four wires are being used, it is possible the user may have one device, such as a computer coupled to a first set of wires, and a second device, such as a printer or another computer coupled to a second set of wires. This presents a problem if the user wants to communicate from the first device to the second device, such as to transfer a file between computers or to download a file for printing.

A conventional approach to transferring files is to download the file to a floppy disk, and hand-carry the file to the other computer. An alternative conventional approach is to insure that both computers are coupled to the same pair of wires, and to then utilize the HomePNA network to transfer the files. This approach becomes more problematic when the number of devices coupled to the wires is increased. Similarly, the approach does not work if the other device is a printer that does not have floppy disk capability.

There is therefore a need for a simple approach to enable the communication between two devices that are coupled to separate telephone lines within a home, by way of a HomePNA network.

### SUMMARY OF THE INVENTION

In accordance with the principles of the present invention, a home networking system comprises a first home network on a first telephone line, and a second home network on a second telephone line. A home network filter bridge couples the first home network and the second home network.

A home networking bridge in accordance with another aspect of the present invention comprises means for spectrally coupling high frequency signals on a first home network to high frequency signals on a second home network, and means for isolating low frequency signals relating to voice signals carried over wiring utilized by the first home network from low frequency signals relating to voice signals carried over wiring utilized by the second home network.

A method of bridging a first home network operating over a first telephone line to a second home network operating over a second telephone line in accordance with yet another aspect of the present invention comprises spectrally connecting a first telephone line to a second telephone line, and communicating signals above a predetermined spectral level between the first telephone line and the second telephone line while isolating signals below the predetermined spectral level between the first telephone line and the second telephone line.

### BRIEF DESCRIPTION OF THE DRAWINGS

Features and advantages of the present invention will become apparent to those skilled in the art from the following description with reference to the drawings, in which:
Fig. 1 shows the use of a home network filter bridge connecting in a spectral band associated with a home network (e.g., HomePNA) two separate networks operating over two separate telephone lines, in accordance with the principles of the present invention.
Fig. 2 is a detailed diagram of the filter bridge shown in Fig. 1 including a band pass filter (BPF), in accordance with an embodiment of the present invention.
Fig. 2A shows an exemplary band pass filter shown in Fig. 2.
Fig. 3 depicts the selection of the HomePNA spectral band using the band pass filter of the filter bridge shown in Fig. 2, in accordance with the principles of the present invention.
Fig. 4 is a detailed diagram of the filter bridge shown in Fig. 1 including a high pass filter (HPF), in accordance with another embodiment of the present invention.
Fig. 4A shows an exemplary high pass filter shown in Fig. 4.
Fig. 5 depicts the selection of the HomePNA spectral band using the high pass filter of the filter bridge shown in Fig. 4, in accordance with the principles of the present invention.
Fig. 6 shows a conventional distribution of spectral regions typically used for voice services, xDSL services such as ADSL and g.Lite or G.992.2, and of a home network such as the HomePNA.

### DETAILED DESCRIPTION OF ILLUSTRATIVE EMBODIMENTS

The present invention relates to the utilization of an appropriate high frequency filter (e.g., a bandpass filter or a high pass filter) with spectral bridging topology to allow a spectrally specific connection of a first telephone line **A** (i.e., a first pair of wires) with a second telephone line **B** (i.e., a second pair of wires) within a residence. Support of home network stations attached on different wire pairs allows a home network to operate in a very efficient, high performance mode, allowing connectivity between devices on separate telephone lines, while minimizing customer confusion.

In many homes, 2-line technology is a reality. A second telephone line exists in many homes, e.g., to allow computer access to the Internet while "lifeline" POTS service is made available on a separate telephone line. Moreover, many SOHO applications have spawned the growth of 2-line homes.

Some consumers may have computers employing home networking technologies residing on separate wire pairs running throughout the residence. The present invention allows such consumers to "bridge" the home networking communications between devices on these separate telephone lines, while at the same time not directly affecting their ability to isolate services on the first telephone line pair from services existing on the second telephone line pair, and also while not degrading the performance of any of the services existing on either telephone line.

In accordance with the principles of the present invention, this criterion is met by the installation of a filter bridge including a high frequency filter between the two telephone lines.

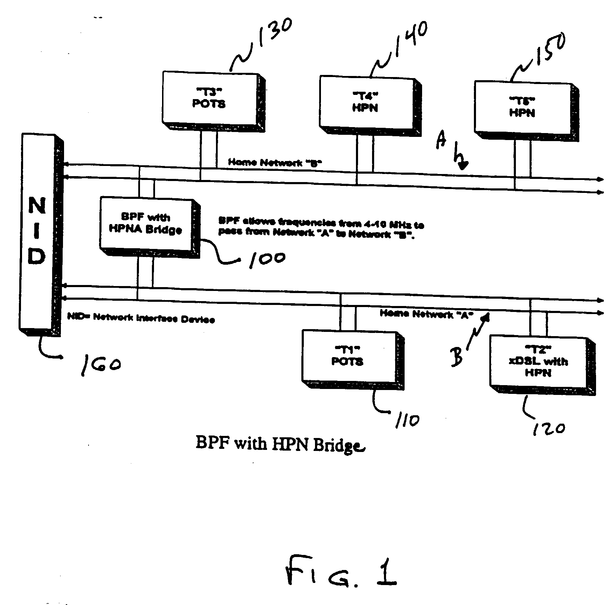

Fig. 1 shows the use of a home network filter bridge connecting in a spectral band associated with a home network (e.g., HomePNA) two separate networks operating over two separate telephone lines **A** and **B**, in accordance with the principles of the present invention.

In particular, as shown in Fig. 1, a home network filter bridge **100** is connected between the wire pair of a first telephone line **A** and the wire pair of a second telephone line **B**. The first telephone line **A** supports a first home network comprising, e.g., a conventional telephone **130**, a first HomePNA network device **140**, and a second HomePNA network device **150**. The second telephone line **B** supports a second home network comprising, e.g., another conventional telephone **110**, and an xDSL device **120** including HomePNA networking capability.

The first telephone line **A** and the second telephone line **B** connect with the same (or different) network interface devices (e.g., at the central office).

The conventional telephones **130**, **110** may be any telephone (or facsimile machine) capable of voice (or FAX) communication with another telephone (or FAX machine) over the public switched telephone network.

The home network filter bridge **100** conveys signals within a home network spectral region (e.g., between 4 MHz and 10 MHz) from the first telephone line **A** to the second telephone line **B**, and from the second telephone line **B** to the first telephone line **A**, while isolating the first telephone line **A** from the second telephone line **B** in regions below the home networking spectral region (e.g., from 0 Hz to 3.5 MHz).

Thus, as shown in Fig. 1, the home network filter bridge **100** is shown in an exemplary embodiment to exist at the Network Interlace Device (NID) **160**. While this may be a point of convenience, it should be noted that the home network filter bridge **100** does not necessarily have to reside at the NID **160** to perform the desired function.

In Fig. 1, terminal 2 **120** residing on telephone line **B** includes a home networking adapter based on, e.g., HomePNA specifications. Terminals 4 and 5 are, e.g., computers located elsewhere within the residence but residing on the telephone line **A**.

If one assumes that terminal 2 **120** is a wide area access device such as a G.992.2 terminal which happens to incorporate HomePNA (HPNA) technology, it is likely to act as a "gateway" machine into the wide area network.

In an exemplary scenario, home network equipped terminals (e.g., PCs) 4 and 5 (**140**, **150**) on telephone line **A** desire to interconnect or communicate with terminal 2 (**120**) on telephone line **B** using the home network as a conduit. Using the home network filter bridge **100** in accordance with the principles of the present invention, terminals 4 and 5 (**140**, **150**) communicate with terminal 2 (**120**) on telephone line **B** as if it were resident on telephone line **A** and existed within the home network established on telephone line **A**. Thus, in accordance with the principles of the present invention, BPF HPNA bridging allows devices on two disparate home networks to communicate with one another without degradation.

The home network filter bridge **100** preferably has little insertion loss within the frequency band used by the relevant home network, e.g., HomePNA devices.

The home network filter bridge **100** also preferably has relatively moderate roll-off characteristics, e.g., such that isolation of the xDSL terminal 2 **120** on home network **B** is maintained from the conventional voice telephone POTS" terminal 3 on home network **A**.

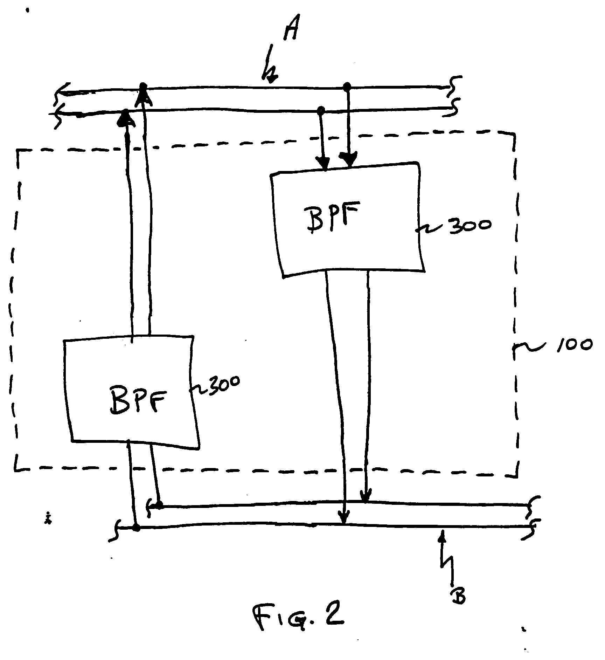

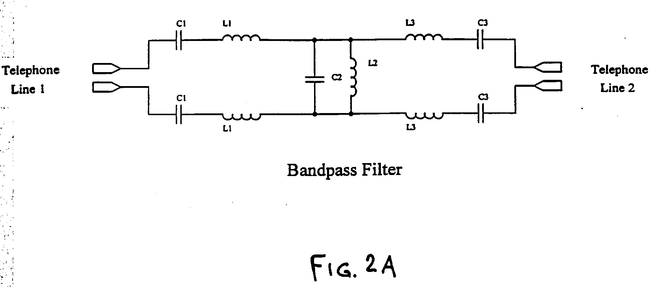

Fig. 2 is a detailed diagram of the filter bridge shown in Fig. 1 including a band pass filter (BPF), in accordance with an embodiment of the present invention.

In particular, Fig. 2 shows relevant components of the home network filter bridge **100** shown in Fig. 1. Signals on a first telephone line **A** are filtered by a suitable filter, e.g., band pass filter **300**, which passes the signal onto the second telephone line **B**.

Similarly, signals on a second telephone line **B** are filtered by a suitable filter, e.g., band pass filter **300**, then passed onto the first telephone line **A** at the same high spectral frequency of the second telephone line **B**.

The band pass filter **300** may be an analog band pass filter, or a digital filter using, e.g., a digital signal processor (DSP). A simple, passive, bi-directional band pass filter or high pass filter are preferred. In a passive implementation, the band pass filter **300** (or high pass filter) is preferably bi-directional, and therefore one filter handles traffic in both directions.

An exemplary band pass filter **300** is shown in Fig. 2A. Of course, the band pass filter **300** of Fig. 2A is meant by way of example only. Indeed, many other types of band pass filters may be implemented within the scope of the present invention.

The connections between the home network filter bridge **100** may be by any suitable means. For instance, standard RJ-11 type connections may be made to both telephone lines **A** and **B** from the home network filter bridge **100**.

Appropriate driver circuits may be implemented, although the passive arrangement shown in Fig. 2, which does not require a driver, may be the least expensive and preferred approach. For instance, an active band pass filter **300** or high pass filter may be implemented with a repeater circuit, i.e., one set of transceivers on each telephone line **A** and **B**, with the signal from one line going through a decode and re-encoding process before it is forwarded onto the other telephone line.

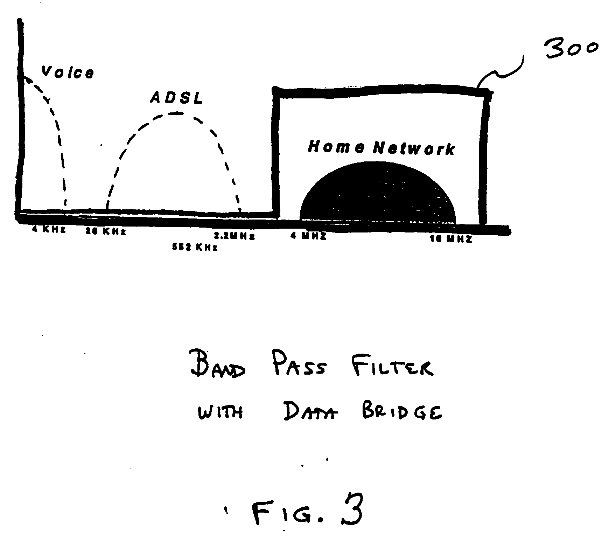

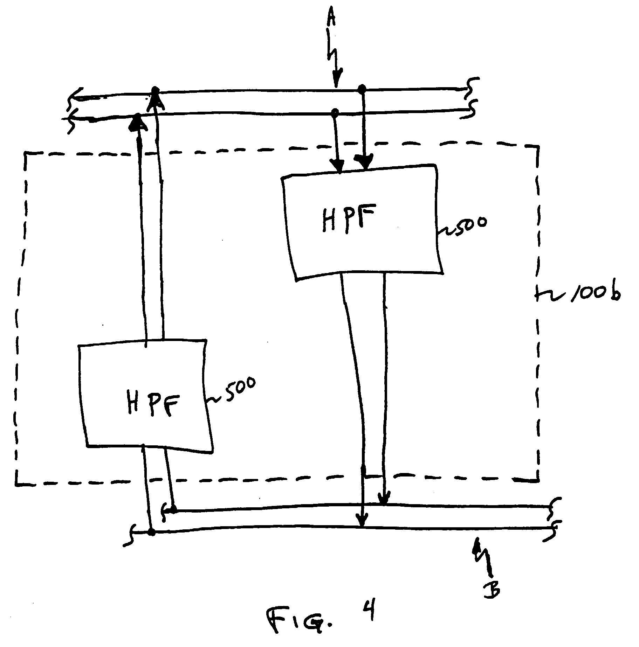

Fig. 3 depicts the selection of the HomePNA spectral band using the band pass filter of the filter bridge shown in Fig. 2, in accordance with the principles of the present invention.

In particular, as shown in Fig. 3, the band pass filter **300** of the home network filter bridge **100** allows a suitable spectral region including the home network of interest to pass (e.g., from 3.5 MHz to 10.5 MHz), and significantly attenuates the undesired portions of the input signal, i.e., those including the voice signals of the input telephone line as well as any other signals (e.g., xDSL signals) resident on the input telephone line.

The home network filter bridge may make use of any suitable filtering circuit prior to bridging the output signal with the output telephone line. For instance, alternative embodiments of the band pass filter with HPNA Bridge include, but are not limited to, a passive LRC network, or an active filter. Each of these solutions offers relative merits and drawbacks depending on the cost/performance model.

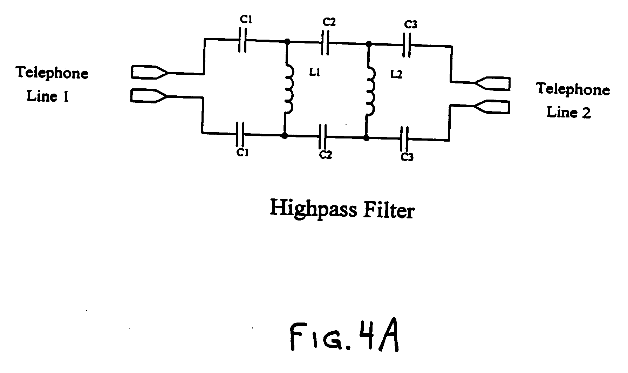

Fig. 4 is a detailed diagram of the filter bridge shown in Fig. 1 including a high pass filter (HPF), in accordance with another embodiment of the present invention.

In particular, as shown in Fig. 4, instead of a band pass filter **300** as shown in Fig. 2, a high pass filter **500** may be implemented. However, the use of a high pass filter **500** presumes that no other services will utilize spectral frequencies above those utilized by the home network (e.g., above 10.5 MHz).

An exemplary high pass filter **500** is shown in Fig. 4A. Of course, the high pass filter **500** of Fig. 4A is meant by way of example only. Indeed, many other types of high pass filters may be implemented within the scope of the present invention.

Appropriate driver circuits may be implemented, although the passive arrangement shown in Fig. 4, which does not require a driver, may be the least expensive and preferred approach.

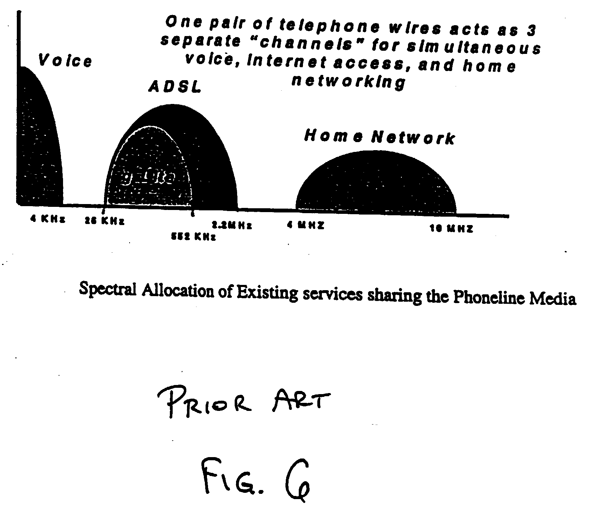

Fig. 5 depicts the selection of the HomePNA spectral band using the high pass filter of the filter bridge shown in Fig. 4, in accordance with the principles of the present invention

In particular, as shown in Fig. 5, the high pass filter **500** of the home network filter bridge **100** allows a suitable spectral region including the home network of interest to pass (e.g., above 3.5 MHz), and significantly attenuates the undesired portions of the input signal, i.e., those including the voice signals of the input telephone line as well as any other signals (e.g., xDSL signals) resident on the input telephone line.

By employing the inventive concept, a "Plug & Play" approach can be employed, wherein home networking devices (e.g., HomePNA devices) may be activated without customer confusion associated with the requirement that they be coupled to the same telephone line. Furthermore, the inventive home network filter bridge allows computers or other devices with compatible home networking technology to communicate with one another easily and directly while at the same time maintaining isolation of existing POTS and xDSL services.

While the invention has been shown and described with reference to the spectral connection of home networks operating on two separate telephone lines, the principles of the present invention relate equally to the spectral connection of more than two telephone lines. For instance, one or more home network filter bridges may be used to spectrally connect three or more telephone lines in series.

While the invention has been described with reference to the exemplary embodiments thereof, those skilled in the art will be able to make various modifications to the described embodiments of the invention without departing from the true spirit and scope of the invention.

## Claims

1. A home networking system, comprising:
a first home network on a first telephone line;
a second home network on a second telephone line; and
a home network filter bridge coupling said first home network and said second home network.

2. The home networking system in accordance with claim 1, wherein said bridge comprises:
a first band pass filter receiving signals from said first telephone line.

3. The home networking system in accordance with claim 2, wherein said bridge further comprises:
a second band pass filter receiving signals from said second telephone line.

4. The home networking system in accordance with claim 2, wherein:
said first band pass filter passes high frequency signals relating to home network communications, while isolating lower frequency signals relating to analog voice signals.

5. The home networking system in accordance with claim 4, wherein:
said first band pass filter passes signals above approximately 4 MHz.

6. The home networking system in accordance with claim 2, wherein said first band pass filter comprises:
an LRC circuit.

7. The home networking system in accordance with claim 2, wherein said first band pass filter comprises:
an active filter circuit.

8. The home networking system in accordance with claim 1, wherein said bridge comprises:
a first high pass filter receiving signals from said first telephone line.

9. The home networking system in accordance with claim 1, wherein:
said first home network and said second home network each utilize communications in accordance with a HomePNA specification.

10. A home networking bridge, comprising:
means for spectrally coupling high frequency signals on a first home network to high frequency signals on a second home network; and
means for isolating low frequency signals carried over wiring utilized by said first home network from low frequency signals carried over wiring utilized by said second home network.

11. The home networking bridge according to claim 10, wherein:
said high frequency signals are above approximately 4 MHz.

12. The home networking bridge according to claim 10, wherein said means for isolating low frequency signals comprises:
a band pass filter.

13. The home networking bridge according to claim 10, wherein said means for isolating low frequency signals comprises:
a high pass filter.

14. A method of bridging a first home network operating over a first telephone line to a second home network operating over a second telephone line, comprising:
spectrally connecting a first telephone line to a second telephone line; and
communicating signals above a predetermined spectral level between said first telephone line and said second telephone line while isolating signals below said predetermined spectral level between said first telephone line and said second telephone line.

15. The method of bridging a first home network operating over a first telephone line to a second home network operating over a second telephone line according to claim 14, wherein:
said signals below said predetermined spectral level include analog voice signals.

16. The method of bridging a first home network operating over a first telephone line to a second home network operating over a second telephone line according to claim 15, wherein:
said signals below said predetermined spectral level further include xDSL service signals.

17. The method of bridging a first home network operating over a first telephone line to a second home network operating over a second telephone line according to claim 14, wherein:
said signals above said predetermined spectral level include home networking information.

18. The method of bridging a first home network operating over a first telephone line to a second home network operating over a second telephone line according to claim 17, wherein:
said home networking information conforms to a HomePNA specification.

19. Apparatus for bridging a first home network operating over a first telephone line to a second home network operating over a second telephone line, comprising:
means for spectrally connecting a first telephone line to a second telephone line; and
means for communicating signals above a predetermined spectral level between said first telephone line and said second telephone line while isolating signals below said predetermined spectral level between said first telephone line and said second telephone line.

20. The apparatus for bridging a first home network operating over a first telephone line to a second home network operating over a second telephone line according to claim 19, wherein:
said signals below said predetermined spectral level include analog voice signals.

21. The apparatus for bridging a first home network operating over a first telephone line to a second home network operating over a second telephone line according to claim 20, wherein:
said signals below said predetermined spectral level further include xDSL service signals.

22. The apparatus for bridging a first home network operating over a first telephone line to a second home network operating over a second telephone line according to claim 19, wherein:
said signals above said predetermined spectral level include home networking information.

23. The apparatus for bridging a first home network operating over a first telephone line to a second home network operating over a second telephone line according to claim 22, wherein:
said home networking information conforms to a HomePNA specification.
